# EUROPEAN PATENT APPLICATION

(11) **EP 2 045 606 A2**
(43) Date of publication of application: **08.04.2009**
(21) Application number: 08012792.1
(22) Date of filing: 15.07.2008
(51) Int. Cl.: G01N 35/00

(54) **Automated analyzer**

(30) Priority: 20.07.2007 JP 2007188985
(71) Applicant: Hitachi High-Technologies Corporation, Tokyo 105-8717 (JP)
(72) Inventor: Tanoue, Hidetsugu, Hitachinaka-shi Ibaraki 312-8504 (JP); Suzuki, Yoichiro, Hitachinaka-shi Ibaraki 312-8504 (JP)
(74) Representative: Strehl Schübel-Hopf & Partner

(57) **Abstract**

A conventional automated analyzer has a mechanism for performing a stirring operation and a mechanism for performing a pipetting operation. The mechanisms are independent of each other. The time interval between the stirring operation and the pipetting operation is at least several seconds. A solid particle starts to settle out at the time of termination of the stirring operation. In the pipetting operation, an operation for suctioning a liquid is performed during a transient period of the process in which the solid particle settles out. The suction of the liquid containing a solid particle during the transition period of the process may cause a variation in the number of solid particles contained in the liquid pipetted. The problem is solved by means for simultaneously performing an operation for stirring a liquid reagent containing a solid particle and an operation for maintaining the reagent.

## Description

### BACKGROUND OF THE INVENTION

### 1. Field of the Invention

The present invention relates to an automated analyzer for qualitatively and quantitatively analyzing a biological sample such as blood and urine, and more particularly to an automated analyzer having a stirring mechanism for stirring a reagent, a reaction solution, and the like.

### 2. Description of the Related Art

Since recent automated analyzers are capable of analyzing a lot of samples for a short time and providing analysis results with high reproducibility compared with conventional techniques, the automated analyzers have been widely used in inspection centers, large hospitals and the like. Analyses to be performed by an automated analyzer are mainly divided into a colorimetric analysis and an immune assay. The colorimetric analysis is to analyze the amount of a specific component contained in blood. The immune assay is to determine whether or not a specific antigen or a specific antibody is present in a sample. The immune assay is to be performed with sensitivity higher by two digits than that of the colorimetric analysis. The immune assay is to be performed using solid particles in general. In the immune assay, the concentration of a biological substance contained in a sample is measured by capturing a solid particle specifically coupled with a target biological substance by an antigen-antibody reaction occurring on a surface of the biological substance and measuring the amount of a labeled substance coupled with the solid particle coupled with the target substance. As the labeled substance, a radioactive substance had been used in the past. Recently, however, a luminous body for emitting light chemically or physically has been used to prevent a harmful substance from being generated. Since the specific gravity of the solid particle contained in a solution is high, the particle settles out onto the bottom of a vessel as time elapses. A liquid reagent containing the solid particle is stirred by means of a stirring mechanism periodically or immediately before pipetting. In this case, the stirring mechanism is separately located from a pipetting mechanism, and the stirring is performed at the time different from the pipetting. Such a technique for stirring a solid particle is described, for example, in JP-A-2002-311034.

### SUMMARY OF THE INVENTION

An automated analyzer described in JP-A-2002-311034 has a mechanism for performing a stirring operation and a mechanism for performing a pipetting operation. The mechanisms are independent of each other. The time interval between the stirring operation and the pipetting operation is at least several seconds. A solid particle starts to settle out at the time of termination of the stirring operation. In the pipetting operation, an operation for suctioning a liquid is performed during a transient period of the process in which the solid particle settles out. The timing of the pipetting is therefore limited.

An object of the present invention is to provide an automated analyzer capable of pipetting a reagent under the condition that solid particles are constantly stirred regardless of the timing of the pipetting.

To accomplish the object of the present invention, the automated analyzer according to the present invention has the following configuration.

The automated analyzer includes a reagent vessel and a probe. The reagent vessel is adapted to accommodate a reagent containing a solid particle. The probe is adapted to pipette a predetermined amount of a liquid reagent present in the reagent vessel. The automated analyzer further includes a probe driver for moving the probe within the reagent before the reagent is suctioned by means of the probe.

The solid particle is generally a spherical magnetic particle (beads). However, as long as particles that are not liquid are dispersed in a liquid, an effect of the present invention can be obtained. The probe is pipetting means capable of suctioning and delivering a target liquid by using means for generating pressure, such as a syringe or a bellows. There are some cases where a member, which directly contacts a liquid to be pipetted, is called a nozzle. The probe may include a nozzle as one of its constitutional elements and an arm for moving the nozzle to a target location. The movement of the probe within the reagent is performed in order to stir the solid particle contained in the reagent. The movement is not limited as long as a stirring effect can be obtained. For example, the probe may reciprocate or revolve.

The automated analyzer does not require a special stirring mechanism only for contacting a liquid containing a solid particle and stirring the liquid. It is not necessary that a stirring mechanism be placed in another reagent and a liquid reagent containing a solid particle of cleaning water. Since the number of parts of the automated analyzer is reduced, the cost of a stirring mechanism and a space occupied by the analyzer can be reduced. The cost of the automated analyzer having a mechanism is therefore reduced. The automated analyzer is capable of performing a stirring operation and a pipetting operation simultaneously. This reduces the time for an analysis.

### BRIEF DESCRIPTION OF THE DRAWINGS

Fig. 1 is an explanatory diagram showing a first embodiment of the present invention.
Fig. 2 is an explanatory diagram showing a second embodiment of the present invention.
Fig. 3 is an explanatory diagram showing a third embodiment of the present invention.
Fig. 4 is an explanatory diagram showing a fourth embodiment of the present invention.
Fig. 5 is an explanatory diagram showing a fifth embodiment of the present invention.

### DESCRIPTION OF THE PREFERRED EMBODIMENTS

Embodiments of the present invention will be described with reference to the accompanying drawings.

### First Embodiment

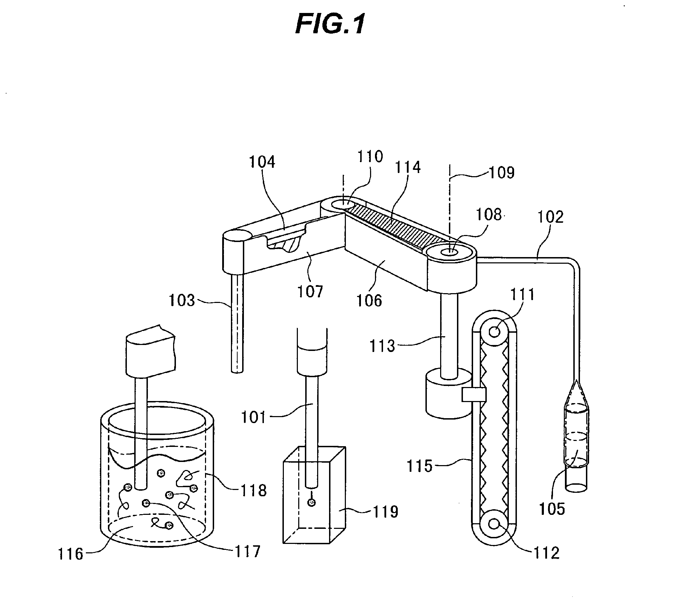

Fig. 1 is a diagram showing an outline configuration of a pipetting mechanism according to a first embodiment of the present invention.

In Fig. 1, the pipetting mechanism includes a probe 101, tubes 102 to 104, a syringe 105, a first arm 106, a second arm 107, a column 113, a first belt 114, and a second belt 115.

The second arm 107 is connected with a first shaft 110 to which a rotation force about an axis 109 is transmitted through the first belt 114. The second arm 107 rotates about the first shaft 110. The first arm 106 is connected to a second shaft 108 whose central axis corresponds to the axis 109. The first arm 106 rotates about the axis 109 in accordance with rotation of the second shaft 108. The central axis of the column 113 is coaxial with the axis 109 of the second shaft 108. The column 113 is connected with the second belt 115 rotating around a third shaft 111 and a fourth shaft 112. The column 113 performs a translational motion. The first arm 106 performs a translational motion in accordance with the motion of the column 113.

Since the probe 101 is supported by the second arm 107, the probe 101 is capable of three-dimensionally moving by means of a combination of movements of the second shaft 110, the shaft 108, and the column 113. The tube 103 is provided in the probe 101. The tube 103 is connected with the tubes 104 and 102, and the syringe 105.

The probe 101 is capable of moving into a reagent vessel 118 in which a liquid reagent 116 containing solid particles 117 is present, and causing the liquid reagent 116 to be stirred by a three-dimensional movement of the probe 101. The solid particles 117 are uniformly dispersed in the liquid reagent 116.

When the solid particles 117 are uniformly dispersed in the liquid reagent 116 and negative pressure is applied to the inside of the tube 103 by means of the syringe 105, the liquid reagent 116 containing the solid particles 117 uniformly dispersed is held in the tube 103 due to the negative pressure.

When the probe 101 moves into a vessel 119 and positive pressure is applied to the inside of the tube 103 by means of the syringe 105, the liquid reagent 116 containing the solid particles 117 uniformly dispersed is pipetted into the vessel 119 due to the positive pressure.

### Second Embodiment

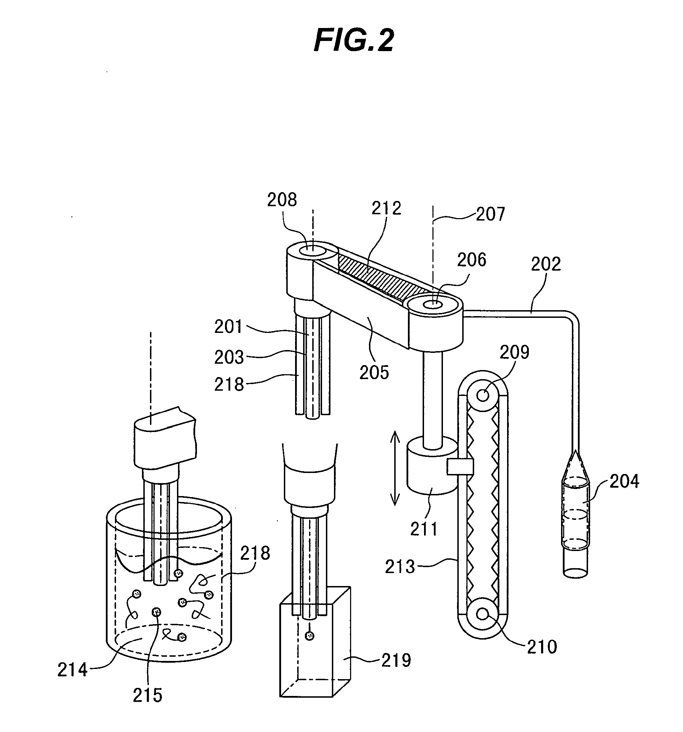

Fig. 2 is a diagram showing an outline configuration of a pipetting mechanism according to a second embodiment of the present invention.

In Fig. 2, the pipetting mechanism includes a probe 201, a stirring bar 218, a first tube 202, a second tube 203, a syringe 204, a first arm 205, a column 211, a first belt 212, and a second belt 213.

The stirring bar 218 is connected with a first shaft 208 to which a rotation force about an axis 207 is transmitted through the first belt 212. The stirring bar 218 rotates around the first shaft 208. The first arm 205 is connected to a second shaft 206 whose central axis corresponds to the axis 207. The first arm 205 rotates about the axis 207 in accordance with rotation of the second shaft 206. The central axis of the column 211 is coaxial with the axis 207 of the second shaft 206. The column 211 is connected with the second belt 213 rotating around a third shaft 209 and a fourth shaft 210. The column 211 performs a translational motion. The first arm 205 performs a translational motion in accordance with the motion of the column 211.

Since the probe 201 is supported by the first arm 205, the probe 201 is capable of two-dimensionally moving by means of a combination of movements of the shaft 206 and the column 211. The second tube 203 is provided in the probe 201. The second tube 203 is connected with the first tube 202 and the syringe 204.

The probe 201 is capable of moving into a reagent vessel 216 in which a liquid reagent 214 containing solid particles 215 is present, and causing the liquid reagent 214 to be stirred by a rotation movement of the stirring bar 218 or a two-dimensional movement of the probe 201. The solid particles 215 are uniformly dispersed in the liquid reagent 214.

When the solid particles 215 are uniformly dispersed in the liquid reagent 214 and negative pressure is applied to the inside of the second tube 203 by means of the syringe 204, the liquid reagent 214 containing the solid particles 215 uniformly dispersed is held in the second tube 203 due to the negative pressure.

When the probe 201 moves into a vessel 219 and positive pressure is applied to the inside of the second tube 203 by means of the syringe 204, the liquid reagent 214 containing the solid particles 215 uniformly dispersed is pipetted into the vessel 219 due to the positive pressure.

### Third Embodiment

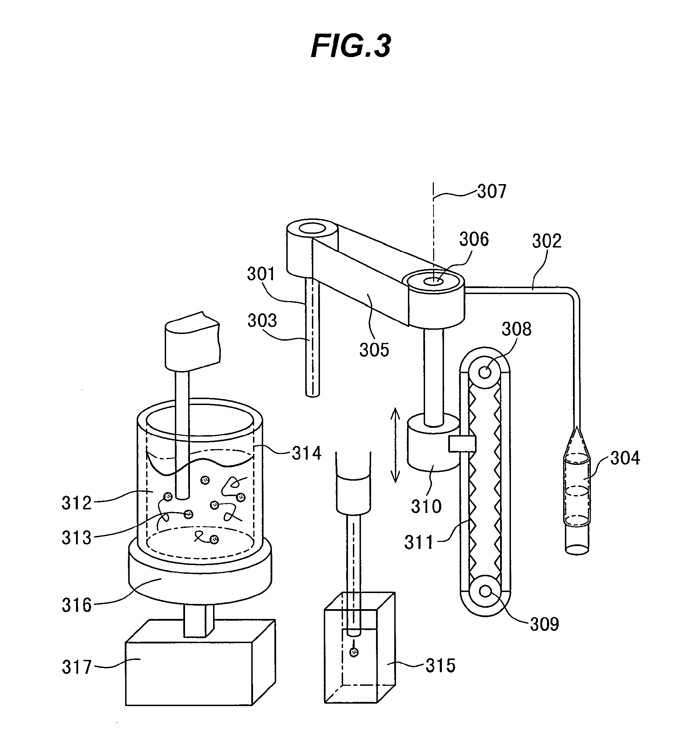

Fig. 3 is a diagram showing an outline configuration of a pipetting mechanism according to a third embodiment of the present invention.

In Fig. 3, the pipetting mechanism includes a probe 301, a first tube 302, a second tube 303, a syringe 304, an arm 305, a column 310, a belt 311, a reagent vessel holder 316, and a swing motion generator 317.

The arm 305 rotates about an axis 307 in accordance with rotation of a first shaft 306. The central axis of the column 310 is coaxial with the axis 307. The column 310 is connected with the belt 311 rotating around a second shaft 308 and a third shaft 309 and performs a translational motion. The arm 305 performs a translational motion in accordance with the motion of the column 310.

Since the probe 301 is supported by the arm 305, the probe 301 is capable of two-dimensionally moving by means of a combination of movements of the shaft 306 and the column 310. The second tube 303 is provided in the probe 301 and connected with the first tube 302 and the syringe 304.

The probe 301 moves into a reagent vessel 314 in which a liquid reagent 312 containing solid particles 313 is present. The probe 301 then contacts the liquid reagent 312. The reagent vessel 314 is held and positioned by the reagent vessel holder 316. Since the reagent vessel holder 316 moves by means of the swing motion generator 317, the reagent vessel 314 swings. The liquid reagent 312 is then stirred. Therefore, the solid particles 313 are uniformly dispersed in the liquid reagent 312.

When the solid particles 313 are uniformly dispersed in the liquid reagent 312 and negative pressure is applied to the inside of the second tube 303 by means of the syringe 304, the liquid reagent 312 containing the solid particles 313 uniformly dispersed is held in the second tube 303 due to the negative pressure.

When the probe 301 moves into a vessel 315 and positive pressure is applied to the inside of the second tube 303 by means of the syringe 304, the liquid reagent 312 containing the solid particles 313 uniformly dispersed is pipetted into the vessel 315 due to the positive pressure.

In this method, after the probe is inserted into the reagent, only the reagent vessel then swings to stir the solid particles while the position of the probe is maintained for a fixed time. There is a demand to improve an efficiency of an analysis to be performed by an automated analyzer and to reduce the time for an analysis process such as pipetting and stirring. It is difficult that a pipetting nozzle moves for the stirring in order to improve accuracy of pipetting. It is, therefore, desirable that the nozzle be fixed during the pipetting. Even in this case, the reagent vessel can swing to stir the solid particles during the pipetting in the method shown in Fig. 3. Therefore, there is an advantage in the method shown in Fig. 3, compared with the method shown in Fig. 1.

JP-A-S63-148166 discloses a technique in which a pipetting nozzle has a stirring wing. In the technique disclosed in JP-A-S63-148166, it is necessary that after pipetting, the stirring wing move in order to perform stirring. On the other hand, in the method shown in Fig. 3, the pipetting and the stirring can be performed simultaneously, resulting in a reduction in the time for the analysis.

### Fourth Embodiment

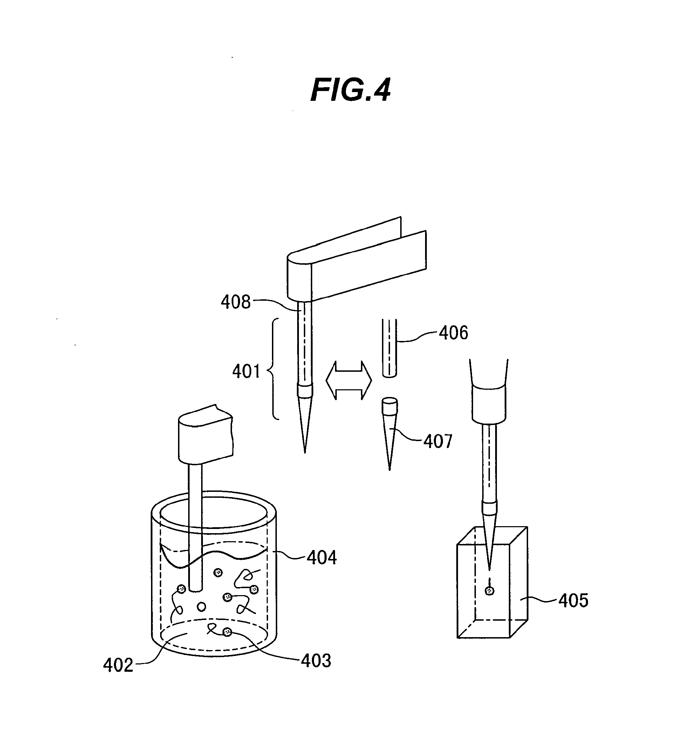

Fig. 4 is a diagram showing an outline configuration of a pipetting mechanism according to a fourth embodiment of the present invention.

In Fig. 4, a probe 401 is a pipetting mechanism having a liquid contact section 407 and a non-liquid-contact section 406. The liquid contact section 407 and the non-liquid-contact section 406 can be separated from each other. The liquid contact section 407 can be replaced with a new liquid contact section when there is an effect which has an adverse impact on an analysis result, such as abnormal pressure within the second tube 408 due to transformation of the liquid contact section 407, contamination such as an attached substance which may impact on the analysis, and a change in the amount of a liquid pipetted. The replacement makes it possible to pipette, into a vessel 405, a liquid reagent 402 containing solid particles 403 uniformly dispersed in a reagent vessel 404 with high reliability.

### Fifth Embodiment

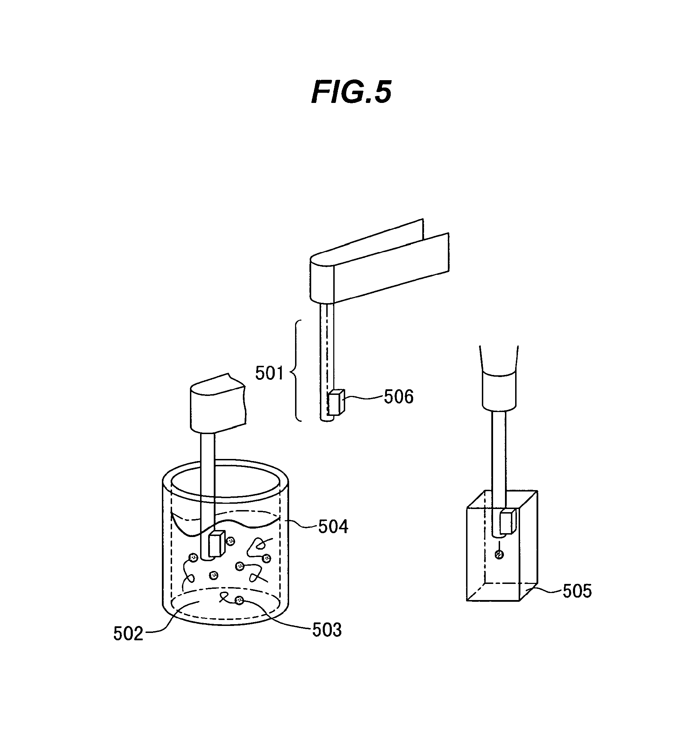

Fig. 5 is a diagram showing an outline configuration of a pipetting mechanism according to a fifth embodiment of the present invention.

In Fig. 5, the pipetting mechanism has a probe 501 having a portion which is to be contacted with a reagent solution 504 and is provided with a structural object 506. When the relative position of the probe 501 with respect to the reagent solution 504 is changed due to the structural object 506, mechanical resistance occurring between the probe 501 and a liquid reagent 502 is increased. The liquid reagent 502 can therefore be well stirred. This enhances the tendency that solid particles 503 are uniformly dispersed in the liquid reagent 502. The time period for uniform dispersion of the solid particles 503 is reduced, while the time period when the solid particles 503 are in a uniformly dispersed state is increased. The accuracy of pipetting the liquid reagent 502 containing the solid particles 503 can be improved.

## Claims

1. An automated analyzer comprising:
a reagent vessel for accommodating a reagent containing a solid particle;
a probe for pipetting a predetermined amount of a liquid reagent present in the reagent vessel; and
a probe driver for moving the probe within the reagent before the reagent is suctioned by means of the probe.

2. An automated analyzer comprising:
a reagent vessel for accommodating a reagent containing a solid particle;
a probe for pipetting a predetermined amount of a liquid reagent present in the reagent vessel; and
a blade that rotates around the probe before the reagent is suctioned by means of the probe.

3. An automated analyzer comprising:
a reagent vessel for accommodating a reagent containing a solid particle;
a probe for pipetting a predetermined amount of a liquid reagent present in the reagent vessel; and
means for causing the reagent vessel to swing under the condition that the probe is inserted in the reagent.

4. The automated analyzer according to claim 1, wherein
a portion of the probe, which is to be contacted with the reagent, is separable from the other portion of the probe.

5. The automated analyzer according to claim 1, wherein
a portion of the probe, which is to be contacted with the reagent, is provided with a structural object for generating a stirring effect.
